# EUROPÄISCHE PATENTSCHRIFT

(11) **EP 4 403 947 B1**
(45) Veröffentlichungstag und Bekanntmachung des Hinweises auf die Patenterteilung: **07.10.2026**
(21) Anmeldenummer: 23152397.8
(22) Anmeldetag: 19.01.2023
(51) Int. Cl.: G01S 5/00, H04W 16/20, H04W 4/33, G01S 5/16, G01S 5/02, H04W 16/18, H04W 24/02

(54) **TECHNIKEN ZUR POSITIONIERUNG VON FUNKFÄHIGEN GERÄTEN**
TECHNIQUES FOR POSITIONING RADIO-CAPABLE DEVICES
TECHNIQUES DE POSITIONNEMENT DE DISPOSITIFS RADIO-ACTIFS

(43) Veröffentlichungstag der Anmeldung: 24.07.2024
(73) Patentinhaber: Deutsche Telekom AG, 53113 Bonn (DE)
(72) Erfinder: JAHN, Carl, 65191 Wiesbaden (DE); EL MALLOUKI, Said, 56329 St. Goar (DE); MINOW, Jascha, 64625 Bensheim (DE)
(74) Vertreter: karo IP

(56) Entgegenhaltungen:
- US-A1- 2022 108 532

## Beschreibung

Die vorliegende Erfindung betrifft das technische Gebiet zur geeigneten Positionierung von funkfähigen Geräten, insbesondere von funkfähigen Endgeräten eines Nutzers.

Es kommt häufig vor, dass funkfähige technische Geräte, insbesondere solche die einen Wi-Fi und/oder Mobilfunkempfang benötigen neu platziert werden müssen. Die Gründe hierfür können vielfältig sein. Beispielhaft kann es passieren, dass ein Nutzer umzieht und deshalb seine Geräte in der neuen Wohnung neu aufstellen muss. Auch kann es sein, dass der Nutzer mit dem Empfang der Geräte nicht zufrieden ist und deswegen eine Position mit einem besseren Funkempfang finden möchte.

Die bisher verwendeten Ansätze haben jedoch alle Schwachpunkte und weisen insbesondere Ungenauigkeiten auf und verlangen dem Nutzer viel Arbeit und Verständnis ab.

Der heutige Ansatz bei der Positionierung von funkfähigen Geräten ist zumeist der, dass der Nutzer wie mit einer Wünschelrute durch seine Wohnung oder sein Haus läuft und dann die entsprechenden Signalstärken angezeigt bekommt. Es obliegt nun dem Nutzer an der richtigen Stelle "Halt" zu machen. Dabei kann es beispielsweise auch vorkommen, dass der Nutzer "zu früh" eine Stelle als die richtige ansieht und bessere Stellen gar nicht entdeckt. Zudem muss sich der Nutzer alle schon bereits abgelaufenen Positionen und deren Signalstärke merken, um zu der Position mit dem besten Funkempfang zurückkehren zu können.

Zudem sind Lösungen bekannt bei den eine Heat-Map bezüglich der Funksignalstärke erstellt wird, wobei es auch bei diesen Lösungen dem Nutzer nachteilig selbst überlassen wird eine geeignete Position zur Positionierung seines Gerätes zu finden.

Die US 2020/108532 A1 offenbart ein Verfahren zur Positionierung eines funkfähigen Gerätes in einer Umgebung mit Funksignalen.

Ein guter Funkempfang, also ein Empfang mit hoher Signalstärke, der funkfähigen Geräte ist zur Sicherstellung eines hohen Quality-of-Services (QoS) jedoch sehr wichtig, um dem Nutzer eine gute Nutzererfahrung bereitzustellen und um manche Services überhaupt zufriedenstellend betreiben zu können.

Der vorliegenden Erfindung liegt daher die Aufgabe zu Grunde, Techniken anzugeben, die es einem Nutzer ermöglichen funkfähige Geräte in eine Position mit einem guten Funkempfang zu positionieren und somit die eingangs genannten Nachteile des Stands der Technik zumindest zum Teil zu beseitigen.

Die vorliegende Erfindung löst diese Aufgabe durch die Merkmale der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Weitere vorteilhafte Ausgestaltungsmerkmale der vorliegenden Erfindung sind in den Patentansprüchen definiert.

Erfindungsgemäß ist ein Verfahren zur Positionierung eines funkfähigen Gerätes in einer Umgebung angegeben, umfassend die folgenden Schritte:
- Bereitstellung eines Funksignalstärke-Test-Geräts, wobei ein Nutzer das Funksignalstärke-Test-Gerät zu verschiedenen Positionen der Umgebung bringt, wobei das Funksignalstärke-Test-Gerät zumindest Erfassungsmittel für eine Funksignalstärke und für Bilder und/oder für eine räumliche Lage des Funksignalstärke-Test-Geräts umfasst;
   ∘ Funkfähigkeit des Gerätes kann im Zusammenhang dieser Erfindung bedeuten, dass das Gerät Funksignale empfangen kann oder dass das Gerät Funksignale empfangen und senden kann; das Funksignalstärke-Test-Gerät kann zumindest Funksignale empfangen;
   ∘ die Erfassungsmittel erfassen also entweder eine Funksignalstärke und Bilder, eine Funksignalstärke und eine räumliche Position des Funksignalstärke-Test-Geräts, oder eine Funksignalstärke und Bilder und eine räumliche Position des Funksignalstärke-Test-Geräts; die Erfassungsmittel des Funksignalstärke-Test-Geräts weisen also zumindest eine Antenne zum Erfassen der Funksignalstärke auf, Bewegungssensoren zum Erfassen der räumlichen Position und/oder eine Kamera zum Anfertigen der Bilder, bei den Bildern handelt es sich also um Bilder der Umgebung, die bevorzugt von dem Funksignalstärke-Test-Gerät selbst erzeugt werden;
   ∘ bei dem funkfähigen Gerät kann sich beispielsweise um einen Repeater, ein Computer, ein WLAN Router, ein Smartphone und/oder einen intelligenten Lautsprecher etc. handeln; das funkfähige Gerät kann als Empfangs-und oder Sendeeinheit für Funksignale ausgebildet sein; Insbesondere kann das Funksignalstärke-Test-Gerät auch das funkfähige Gerät sein;
   ∘ das Funksignalstärke-Test-Geräts ist also insbesondere mobil und kann für den Nutzer leicht in einem dreidimensionalen Raum bewegt werden;
   ∘ das Funksignal kann ein W-LAN Funksignal oder ein Mobilfunksignal sein;
   ∘ bei der Umgebung kann es sich um geschlossene Räume, teilweise geschlossene Räume oder um eine Umgebung im Freien handeln;
   ∘ die Funksignalstärke wird von bereits vorhandenen Funksignalen, die von anderen Sendeeinheiten erzeugt werden, generiert;
- Aufzeichnen der entsprechenden Funksignalstärken und eines entsprechenden Bildes und/oder der entsprechenden räumlichen Lage des Funksignalstärke-Test-Geräts an den jeweiligen verschiedenen Positionen der Umgebung als Messwerte;
   ∘ die Messwerte können also zu einem Vektor zusammengefasst werden, der zumindest folgende Werte aufweisen kann (Fᵢ, Lᵢ), (Fᵢ, Bᵢ), und/oder (Fᵢ, Lᵢ, Bᵢ). Hierbei steht F für die Feldstärke, L die Lage und B für das Bild an der jeweiligen Position i;
   ∘ der Nutzer kann das Aufzeichnen der entsprechenden Messwerte aktiv selbst beenden und/oder wieder aufnehmen; ein Beenden kann insbesondere dann sinnvoll sein, wenn in dem Raum weitere Bereiche existieren in denen das funkfähige Gerät gar nicht aufgestellt werden soll oder kann; das Wiederaufnehmen kann insbesondere dann von Vorteil sein, wenn der Nutzer beim Abscannen der Umgebung unterbrochen wurde, sodass der gesamte Vorgang nicht wieder aufgenommen werden muss, sondern einfach fortgesetzt werden kann;
- Übergabe der Messwerte an einen Positionierungs-Algorithmus, wobei der Positionierungs-Algorithmus die Messwerte vergleicht und eine Ausgabe mit zumindest einer ausgewählten Position zur Positionierung des funkfähigen Gerätes generiert und an ein Signalisierungsmittel des Funksignalstärke-Test-Geräts übergibt;
   ∘ der Positionierungs-Algorithmus, der insbesondere auf einem Prozessor des Funksignalstärke-Test-Geräts implementierbar ist, wählt also automatisiert eine Position zur Positionierung des funkfähigen Gerätes, insbesondere nach festlegbaren Kriterien, aus. Ein mögliches festlegbares Kriterium ist, die Position auszuwählen, die dem bestmöglichen Funksignal, also dem mit der besten Signalstärke, entspricht. Der Algorithmus kann auch mehrere Positionen ausgeben. In diesem Fall kann der Nutzer eine der mehreren Positionen auswählen, wo er das funkfähige Gerät aufstellen möchte, da in der Regel nicht alle Position gleich gut zum Aufstellen des funkfähigen Geräts geeignet sind;
   ∘ bei der Ausgabe von mehreren Positionen kann zuvor festgelegt werden, um wie weit eine Signalstärke von der bestmöglichen Signalstärke abweichen darf, damit deren Position ebenfalls ausgegeben wird. Bevorzugt werden Positionen ausgegeben, deren gemessene Signalstärke an der jeweiligen Position nicht mehr als 5 % von der bestmöglich gemessenen Signalstärke abweicht;
   ∘ die Signalisierungsmittel können eingerichtet sein, um Audiosignale, haptische Signale und/oder visuelle Signale zu erzeugen; bei den Signalisierungsmitteln handelt es sich um Anzeigemittel nämlich ein Display, welches insbesondere zum Anzeigen von Bildern geeignet ist;
- Signalisieren der ausgewählten Position zur Positionierung des funkfähigen Gerätes mittels des Signalisierungsmittels des Funksignalstärke-Test-Geräts.

Dies bietet den Vorteil, dass der Nutzer aktive Hilfe von seinem Funksignalstärke-Test-Gerät bei der Auswahl der richtigen Positionen des funkfähigen Geräts bekommt. Der Nutzer muss demnach nicht mehr, wie es gegenwärtig der Fall ist, durch eine Umgebung, insbesondere seine Wohnung, laufen und permanent die Signalstärke auf dem Display seines Smartphones beachten, um dann eigenständig die Entscheidung zu treffen, welche Position der geeignete Standort ist - was zum einen sehr mühsam ist und zum anderen die Gefahr birgt, dass die besseren Standorte schlichtweg vergessen werden. Das Verfahren wählt vorteilhaft erfindungsgemäß für den Nutzer eine Position basierend auf festlegbaren Kriterien automatisiert aus.

Dabei wird bei dem Aufzeichnen der Messwerte auch jeweils der entsprechende Zeitstempel aufgezeichnet und mit den Messwerten verknüpft. In diesem Fall können die entsprechenden Vektoren also wie folgt beschrieben werden: (Fᵢ, Lᵢ, Tᵢ), (Fᵢ, Bᵢ, Tᵢ), und/oder (Fᵢ, Lᵢ, Bᵢ, Tᵢ).

Hierbei ist Tᵢ der Zeitstempel an der Position i. Hierdurch wird beispielsweise auch ermöglicht, dass bei einem mehrmaligen Abscannen Fluktuationen an einer bestimmten Position ermittelt werden können. Zudem ist durch den Zeitstempel die Bewegungsbahn rekonstruierbar mit der sich das Funksignalstärke-Test-Gerät, insbesondere dreidimensional, durch die Umgebung bewegt hat. Weisen die Vektoren zudem noch Daten von Bewegungssensor, wie beispielsweise Daten von Beschleunigungssensoren auf, des Funksignalstärke-Test-Gerät ist es auch zu jedem Zeitpunkt möglich die Orientierung und/oder die Ausrichtung des Funksignalstärke-Test-Geräts zu bestimmen.

Vorzugsweise wird die Lage des Funksignalstärke-Test-Geräts mittels GPS-Information, W-LAN und/oder Bewegungssensoren erfasst.

Prinzipiell gilt, dass eine Kombination von verschiedenen Daten bezüglich der Lage des Funksignalstärke-Test-Geräts bessere Ergebnisse liefert als lediglich Daten eines einzigen Typs. Hinzu kommt, dass je nachdem, ob sich die Umgebung im Freien oder innerhalb eines Raums befindet, manche Sensordaten besser geeignet sind als andere. Befindet sich die Umgebung beispielsweise im Freien, variieren zum einen die Signalstärken generell nicht so stark wie in geschlossenen Räumen und auch die GPS Koordinaten können genauer bestimmt werden. Soll also eine Position mit guter Signalstärke im Freien für das funkfähige Gerät aufgefunden werden, eignen sich insbesondere GPS Koordinaten als Input für den Positionierungs-Algorithmus. Innerhalb von geschlossenen Räumen reicht allerdings die Auflösung von GPS Koordinaten in der Regel nicht aus, um die entsprechenden Positionen mit einer ausreichenden Auflösung bestimmen zu können. Der sogenannte WLAN-Standard "Wi-Fi 802.11mc ist geeignet und kann verwendet werden, um die dreidimensionale Position im Raum des Funksignalstärke-Test-Geräts zu bestimmen. Die Bewegungssensoren sind insbesondere geeignet, die Orientierung des Funksignalstärke-Test-Geräts bestimmen zu können und zu berechnen wie sich das Funksignalstärke-Test-Gerät von einer Position starten zu einer anderen Position relativ bewegt hat.

Bevorzugt berücksichtigt der Positionierungs-Algorithmus bei der ausgewählten Position deren Geeignetheit zur Positionierung eines funkfähigen Gerätes.

Dies hat den Vorteil, dass dem User solche Positionen zur Positionierung des funkfähigen Geräts signalisiert bzw. angezeigt werden, auf den das funkfähige Gerät beispielsweise einfach abgestellt werden kann. Selbst wenn irgendwo mitten im Raum die Funksignalstärke am besten ist, ist eine solche Stelle mitten im Raum, beispielsweise 30 cm unter der Decke, in der Regel nicht gut geeignet, um das funkfähige Gerät dort pragmatisch platzieren zu können. Der Positionierungs-Algorithmus kann also beispielsweise einen Score errechnen der sich zusammensetzt aus der Stärke des Funksignal und der Geeignetheit der jeweiligen Position zur Positionierung des funkfähigen Geräts. Hierbei können die einzelnen Parameter, insbesondere auch nach Nutzervorgaben, gewichtet werden. Beispielsweise könnte ein solcher Score wie folgt berechnet werden Score = w_{F}*Fᵢ/2 + w_{P}*Gᵢ/2, wobei Fᵢ die Feldstärke an der Position i in einer Skala von 1-100 und Gᵢ die Geeignetheit der Position i in einer Skala von 1-100 und w_{F,P} < 1 die entsprechenden Bestimmungsfaktoren darstellen. Auf diese Weise wird also ein Score von 0-100 berechnet, der einen guten Kompromiss aus der Geeignetheit der Position und der Qualität der Feldstärke wiedergibt. Der Nutzer kann beispielsweise spezifizieren, ab welchem Score ihm eine entsprechende Position angezeigt wird.

Kriterien für eine Geeignetheit können dem Positionierungs-Algorithmus, insbesondere, wenn dieser als eine künstliche Intelligenz in der Form eines neuronalen Netzwerks ausgebildet ist, mit entsprechenden Inputdaten, was nachstehend noch erläutert wird, antrainiert werden.

Kriterien für eine Geeignetheit können beispielsweise sein:
i) dass die Feldstärke im Bereich der entsprechenden Position bei leichter Abweichung dieser Position nur wenig variiert. Dies ist deshalb wichtig, da der Nutzer das funkfähige Gerät, aus welchen Gründen auch immer, leicht verrücken kann und es dann nachteilig wäre, wenn durch dieses leichte verrücken ein deutlich schlechterer Empfang der Funksignale resultieren würde. Eine solche Situation kann insbesondere dann auftreten, wenn sich die Position in der Nähe von Kanten, Säulen und Wänden befindet. Stellt der Algorithmus bei der Auswertung der Feldstärken an einer jeweiligen Position also fest, dass diese zwar eine gute Signalstärke aufweist, benachbart aber eine schlechtere Signalstärke, beispielsweise 5 % schlechter bei einer Entfernung von 5 cm, vorliegt, wird der ehemaligen Position trotz ihrer guten Signalstärke ein niedriger Wert der Geeignetheit G_{S}, beispielsweise G_{S} = 50, zugewiesen. Gs steht hierbei für die Geeignetheit in Bezug auf die Signalstärke.
ii) dass das funkfähige Gerät komfortabel an einer jeweiligen Position abgestellt werden kann. Eine Stelle mitten im Raum, beispielsweise 30 cm unter der Decke, wird sich in der Regel schlechter zum Abstellen des funkfähigen Geräts eignen als eine ebene horizontale Fläche, beispielsweise in der Form eines Tisches oder eine Ablagefläche auf einen Schrank. Dementsprechend würde dem Tisch oder anderen ebenen Flächen ein hoher Wert der Geeignetheit G_{L}, beispielsweise G_{L} = 100, zugewiesen werden. G_{L} steht hierbei für die Geeignetheit in Bezug auf die Lage.

Da die vorstehend beschriebenen Fälle i) und ii) in der Regel zugleich auftreten, setzt sich G funktional aus G_{L} und Gs zusammen: G = G (G_{L}, G_{S}).

Erfindungsgemäß wird die ausgewählte Position durch ein Bild der gemachten Aufnahmen dargestellt, zusätzlich kann eine Markierung in einer erzeugten Karte der Umgebung dargestellt werden und/oder eine Navigationsanweisung für den Nutzer wiedergegeben werden.

Ist die ausgewählte Position beispielsweise auf einen Tisch, so kann dem Nutzer auf dem Display des Funksignalstärke-Test-Gerät einfach dieser Tisch angezeigt werden von dem zuvor beim Scannen der Feldstärke in Umgebung ein Bild aufgenommen wurde. Der Nutzer weiß sofort, dass er sein funkfähiges Gerät auf diesem Tisch platzieren kann, um eine gute Signalstärke zu erhalten. Dies soll an einem einfachen Beispiel erläutert werden: die Kamera des Funksignalstärke-Test-Geräts macht eine Aufnahme an der Position P1, wobei auf dem Bild beispielsweise ein Tisch und ein Hintergrund zu sehen sind und wobei die Signalstärke an der Position P1 aufgezeichnet wird. Das Funksignalstärke-Test-Gerät wird von dem Nutzer bis zu der Position P2 näher an den Tisch herangebracht, wobei an der Position P2 ein weiteres Bild des Tisches und des Hintergrunds erstellt wird und wobei die Signalstärke an der Position P2 gemessen wird. Durch den Vergleich der Bilder an den Positionen P1 und P2 kann ermittelt werden, dass sich die Lage des Funksignalstärke-Test-Geräts relativ näher an dem Tisch befindet, da dieser auf dem Bild an der Position P2 relativ größer dargestellt ist als an der Position P1. Ist nun die Signalstärke an der Position P2 größer eine Position P1, so gibt der Algorithmus zur Positionierung des funkfähigen Geräts die Position P2 aus, die näher an dem Tisch ist. Wird ein drittes Bild an einer Position P3 auf dem Tisch gemacht (wobei auf dem Bild an der Position P3 zumindest der Hintergrund und/oder abschnittsweise auch der Tisch zu sehen sein kann), kann insbesondere durch Bilderkennungs-Routinen, durch den Vergleich mit den anderen Bildern an den Position P1 und P2 ermittelt werden, dass sich das Funksignalstärke-Test-Geräts nun auf dem Tisch befindet. Weist die Position P3 zudem die stärkste Signalstärke auf, kann der Algorithmus zur Positionierung des funkfähigen Geräts die Position des Tisches P3 ausgeben. Zur besseren Bestimmung der Position können insbesondere die vorstehend beschriebenen erfassten Daten im Zusammenhang mit der räumlichen Lage zusätzlich verwendet werden.

In einer anderen Ausführungsform kann die Variante, bei der ein Bild der Position angezeigt wird, auch wie folgt ausgestaltet sein: es kann während des gesamten Messvorgangs eine Videoaufnahme erstellt werden. Dabei wird der gesamte "Weg" beim Messen von Signalstärken per Video aufgenommen. Die Signalstärken werden während des gesamten Messvorgangs inklusive des zugehörigen Zeitstempels aufgezeichnet. Nach Beenden des Ablaufens der Umgebung und damit des Messvorgangs, berechnet der Algorithmus zu welchem Zeitpunkt des Messvorgangs die beste Signalstärke vorlag, sucht diesen Zeitstempel im aufgenommenen Video heraus und fertigt ein Bild davon an und zeigt dies dem Nutzer. Der Nutzer sieht das Bild, erkennt wo dieses Bild im Raum bzw. in der Wohnung/im Haus aufgenommen wurde und platziert das funkfähige Gerät genau dort. Aus der bisherigen Vorgehensweise die einer "Schatzsuche" gleicht, wird hierdurch ein strukturierter nutzerzentrischer Prozess, der eine erheblich höhere Wahrscheinlichkeit aufweist, den optimalen Aufstellort für das funkfähige Gerät zu identifizieren.

In einer bevorzugten Ausführungsform zeigt das Funksignalstärke-Test-Gerät dem Nutzer auf seinem Display einen hervorgehobenen Gegenstand, der zu Positionierung geeignet ist, an.

Das hervorgehobene Anzeigen ist dahingehend zu verstehen, dass, wenn auf dem angezeigten Bild mehrere Gegenstände, Tische oder dergleichen zu sehen sind, derjenige hervorgehoben dargestellt wird (beispielsweise blinkend oder durch einen Pfeil markiert), der durch den Algorithmus zur Positionierung des funkfähigen Geräts ausgewählt wurde. Dies bietet den Vorteil, dass der Nutzer auch dann den ausgewählten Gegenstand auf dem angezeigten Bild richtig erkennt, wenn auf diesem Bild mehrere Gegenstände gezeigt sind, die prinzipiell zur Positionierung des funkfähigen Gerätes aufgrund ihrer Lage oder Beschaffenheit geeignet sein können.

In einer Ausführungsform umfasst der Positionierungs-Algorithmus eine künstliche Intelligenz zum Erkennen der geeigneten Gegenstände.

Dies bietet den Vorteil, dass der Algorithmus zuverlässig unterscheiden kann, welche Gegenstände in einer Umgebung, also beispielsweise ein Tisch oder ein Schrank, zur Positionierung des funkfähigen Geräts geeignet sind. Eine künstliche Intelligenz ist hierfür aufgrund ihrer Mustererkennungseigenschaften besonders gut geeignet. Die künstliche Intelligenz kann beispielsweise im Vorfeld trainiert werden, geeignete Positionen zur Positionierung des funkfähigen Geräts, von solchen die ungeeignet sind, zu unterscheiden. Beispielsweise können der künstlichen Intelligenz hierfür Bilder von Tischen, Schränken mit horizontalen Flächen als Input übergeben und als geeignet zur Positionierung markiert werden. Weitere Inputdaten können durch solche Gegenstände ausgebildet werden, die zur Positionierung ungeeignet sind, wie beispielsweise eine Lampe an der Decke, und als ungeeignet markiert werden. Auf diese Art und Weise wird das neuronale Netzwerk der künstlichen Intelligenz trainiert und kann geeignete von ungeeigneten Gegenständen voneinander unterscheiden und diesen gegebenenfalls einen entsprechenden Score der Geeignetheit G_{L} zuweisen, der ebenfalls in der Trainingsphase bekannt gemacht werden kann.

Zweckmäßigerweise kann das dargestellte Bild von dem in der ausgewählten Position erstellten Bild abweichen, wobei das abweichende dargestellte Bild insbesondere unter Berücksichtigung der Zeitstempel extrapoliert wird.

Es kann der Fall sein, dass das Bild, dass an einer Position mit sehr guter Funkstärke gemacht wurde nicht den Gegenstand zeigt, auf dem das funkfähige Gerät abgestellt werden kann. So kann es vorkommen, dass das Bild an dieser Position auf einem Tisch gemacht wurde, der sich besonders gut zur Positionierung des funkfähigen Geräts eignet, dass dieser Tisch auf dem Foto an dieser Stelle aber nicht zu sehen ist. Durch die Extrapolation, kann berechnet werden, wie sich das Funksignalstärke-Test-Geräts im Raum zu oder von dieser Stelle wegbewegt hat. Demnach kann der Algorithmus ein Bild ermitteln, auf dem diese Stelle, insbesondere aus einer gewissen Entfernung, zu sehen ist. Dieses Bild wird als das abweichende dargestellte Bild bezeichnet. Auf diesem abweichenden Bild kann nun beispielsweise der Tisch wieder zu sehen sein, sodass dem Nutzer angezeigt werden kann, dass die ausgewählte Position zur Positionierung des funkfähigen Geräts der Tisch ist.

Die erzeugte Karte kann dem Nutzer als eine Heat-Map dargestellt werden. Insbesondere kann diese Heat-Map eine dreidimensionale Heat-Map sein, sodass der Nutzer vorteilhaft leicht erkennen kann in welchen Bereichen der Umgebung für ihn zufriedenstellende Signalstärken vorhanden sind. Bevorzugt kann der Nutzer vorher festlegen, welche Signalstärken er zumindest angezeigt haben möchte, sodass die Informationen auf der Heat-Map vorteilhaft auf die für ihn wesentlichen reduziert werden.

In einer bevorzugten Ausführungsform berücksichtigt der Positionierungs-Algorithmus bei der Ermittlung der ausgewählten Position Zielparameter der Funksignalstärke.

Dies bietet den Vorteil, dass effektiv nur solche Positionen ausgewählt werden, die bestimmte Zielparameter, die vom Nutzer an den Positionierungs-Algorithmus über ein Eingabemittel des Funksignalstärke-Test-Geräts übergeben werden kann, berücksichtigt werden. Dies führt zum einen zu einer effektiven Datenreduktion, da die Messwerte, die nicht den Zielparametern entsprechen verworfen werden können und zudem zu einer gesteigerten Übersichtlichkeit der Signalisierung der ausgewählten Position.

Die Zielparameter können umfassen:
- zumindest ein funkfähiges Zielnetzwerk,
   ∘ gerade in dicht besiedelten Gebieten gibt es kaum noch eine Umgebung, in der lediglich ein einziges Funknetzwerk angezeigt wird. Zumeist existieren an einer Position im Raum Signale von verschiedenen Funknetzwerken mit ihren entsprechenden Signalstärken. Für den Nutzer ist es allerdings wenig hilfreich, und es werden zudem unnötige Messwerte erhoben und Auswertungen vorgenommen, wenn die Signalstärke von Funknetzwerken analysiert wird, zu denen der Nutzer überhaupt keinen Zugang hat. Dementsprechend können Nutzer über ein Eingabemittel zumindest ein bestimmtes funkfähiges Zielnetzwerk markieren, sodass die Messwerte lediglich für dieses festgelegte erhoben und die Auswertung nur für dieses Zielnetzwerk ausgeführt wird. Der Nutzer hat allerdings auch die Möglichkeit zumindest zwei funkfähige Zielnetzwerke zu markieren, da funkfähige Geräte zunehmend Multi-Path-fähig sind und deshalb Daten von mehreren Funknetzwerken gleichzeitig nutzen können. Beispielsweise kann das erste markierte Zielnetzwerk ein Mobilfunknetz und das zweite markierte Zielnetzwerk ein WLAN Netzwerk sein.
- Geeignetheit zur Positionierung, und/oder
   ∘ der Nutzer kann spezifizieren, welche Voraussetzungen eine Geeignetheit zur Positionierung zu erfüllen hat. Beispielsweise, dass eine ebene horizontale Fläche an den ausgewählten Positionen vorhanden sein soll;
- QoS-Zielwerte.
   ∘ QoS Zielwerte können beispielsweise eine Bandbreite, eine Latency, Signalstärken und/oder andere Parameter sein, die die Performance des Funksignals charakterisieren. Hat beispielsweise ein gewisser Service eine Mindestanforderung an solche QoS Zielwerte, werden durch die entsprechende Bekanntmachung lediglich Position ausgewählt, die diese QoS Zielwerte erfüllen.

Bevorzugt signalisiert der Positionierungs-Algorithmus, wenn an einer Position die QoS-Zielwerte erreicht werden.

Dies bietet den Vorteil, dass der Nutzer seine Suche nach geeigneten Positionen bezüglich der Signalstärke an dieser Stelle zeitsparend abbrechen kann, und nicht mehr die gesamte Umgebung scannen muss, bevor der Positionierungs-Algorithmus seine Auswertung vornimmt und die ausgewählten Positionen ausgibt. Da der Nutzer die QoS-Zielwerte selbst festlegen kann, kann dennoch sichergestellt werden, dass an dieser Position für den Nutzer zufriedenstellende Voraussetzungen bezüglich der Signalstärken gewährleistet sind.

Gemäß einem zweiten Aspekt der Erfindung ist ein Funksignalstärke-Test-Gerät angegeben, das zur Ausführung des vorgenannten Verfahrens eingerichtet ist umfassend
- Erfassungsmittel eingerichtet zum Erfassen einer Funksignalstärke und für Bilder und/oder für eine räumliche Lage des Funksignalstärke-Test-Geräts an verschiedenen räumlichen Positionen;
   ∘ Das Funksignalstärke-Test-Gerät ist insbesondere mobil und kann insbesondere ein Smartphone und/oder Tablet auf dem der vorstehend beschriebene Positionierungs-Algorithmus implementierbar ist; die Erfassungsmittel können Antennen, Kameras und oder Bewegungssensor sein, die beispielsweise schon standardmäßig auf Smartphones oder Tablets vorhanden sind;
- Speichermittel eingerichtet zum Aufzeichnen der entsprechenden Funksignalstärken und eines entsprechenden Bildes und/oder der entsprechenden räumlichen Lage des Funksignalstärke-Test-Geräts an den jeweiligen verschiedenen Positionen der Umgebung als Messwerte;
   ∘ auch solche Speichermittel sind standardmäßig auf Smartphones oder Tablets vorhanden;
- Prozessor auf dem ein Positionierungs-Algorithmus implementiert ist, wobei der Positionierungs-Algorithmus eingerichtet ist die Messwerte zu vergleichen und eine Ausgabe mit einer ausgewählten Position zur Positionierung des funkfähigen Gerätes zu generieren generiert und an ein Signalisierungsmittel des Funksignalstärke-Test-Geräts übergibt;
   ∘ ein solcher Prozessor ist ebenfalls standardmäßig auf Smartphones oder Tablets vorhanden. Der in diese Anmeldung erstmals vorgestellte Positionierungs-Algorithmus kann auf ein Smartphone oder ein Tablet geladen und ausgeführt werden, insbesondere in der Verwirklichung als App.
- Signalisierungsmittel umfassend ein Display zur Anzeige von Bildern und eingerichtet zum Signalisieren der ausgewählten Position zur Positionierung des funkfähigen Gerätes anhand der Darstellung eines Bildes der gemachten Aufzeichnung.
   ∘ Bei den Signalisierungsmitteln handelt es sich um Anzeigenmittel, nämlich ein Display oder ein LED.

In einer bevorzugten Ausgestaltung ist das Funksignalstärke-Test-Gerät als das funkfähige Gerät ausgebildet.

Das hat den Vorteil, dass der Nutzer nicht extra ein Funksignalstärke-Test-Gerät kaufen muss, sondern sein funkfähiges Gerät, welches er sowieso einsetzen will, verwenden kann. Hierfür kann das funkfähige Gerät ein Betriebssystem bereitstellen auf dem das erfindungsgemäße Verfahren als App installiert werden kann.

Zweckmäßigerweise weist das Funksignalstärke-Test-Gerät ein Feedbackmodul auf, das eine korrekte Scangeschwindigkeit der Funksignalstärke, insbesondere durch einen Nutzer, signalisiert. Beispielsweise kann das Feedbackmodul durch vibrieren oder ein akustisches Signal anzeigen, dass der Nutzer seine Scangeschwindigkeit verlangsamen soll.

Hierdurch wird vorteilhaft sichergestellt, dass der Nutzer nicht zu schnell mit seinem Funksignalstärke-Test-Gerät die Umgebung scannt und die Messwerte dementsprechend nicht verlässlich erhoben werden können. Der Nutzer kann ebenfalls informiert werden, wenn er seine Scangeschwindigkeit erhöhen kann, sodass er für den Vorgang nicht unnötig lang benötigt. Bevorzugt unterscheidet sich das Feedback für das zu langsame Scannen und das zu schnelle Scannen voneinander, sodass der Nutzer weiß, ob er schneller oder langsamer scannen kann bzw. darf.

Im Folgenden werden bevorzugte Ausführungsbeispiele der vorliegenden Erfindung unter Bezugnahme auf die begleitenden Figuren erläutert:
- Fig. 1:: zeigt schematisch eine Umgebung mit verschiedenen Funksignalstärken;
- Fig. 2a:: zeigt ein erstes erfindungsgemäßes Verfahren zur Positionierung eines funkfähigen Gerätes;
- Fig. 2b:: zeigt ein zweites erfindungsgemäßes Verfahren zur Positionierung des funkfähigen Gerätes;
- Fig. 3a:: zeigt schematisch ein Smartphone eingerichtet zur Ausführung der erfindungsgemäßen Verfahren nach Fig. 2a und Fig. 2b;
- Fig. 3b:: zeigt die Darstellung einer ausgewählten Position zur Positionierung des funkfähigen Geräts auf dem Smartphone.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

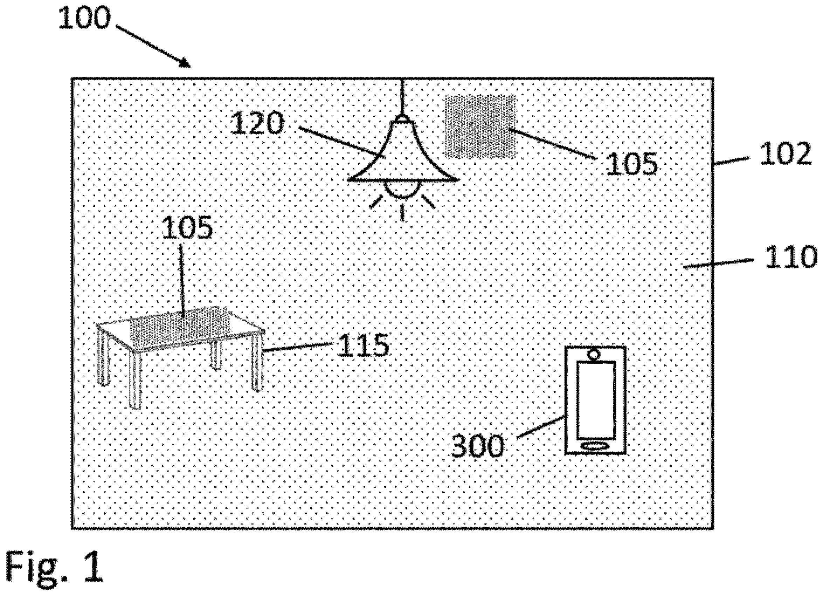

Fig. 1 zeigt schematisch eine Umgebung 100 in der Form eines geschlossenen Raumes 100 mit Wänden 102 aufweisend verschiedene Funksignalstärken 105, 110. Die Stärke der Funksignalstärken 105, 110 ist durch die Dichte der Punktverteilung in Fig. 1 folgendermaßen wiedergegeben: je dichter die Punkte angezeigt sind, desto höher ist die Funksignalstärke. Dementsprechend ist die Funksignalstärke 105 höher als die Funksignalstärke 110. Es ist gezeigt, dass sich ein erster Bereich der erhöhten Funksignalstärke 105 an der Oberfläche eines Tisches 115 und sich ein zweiter Bereich der erhöhten Funksignalstärke 105 "in der Luft" neben einer Lampe 120 befindet.

Die Umgebung 100 soll im Hinblick auf die vorhandenen Funksignalstärken 105,110 mittels eines Funksignalstärke-Test-Geräts 300, hier in der speziellen Ausgestaltung als einem Smartphone 300, dergestalt nach dem erfinderischen Verfahren ausgemessen werden, dass ein Nutzer komfortabel die Bereiche der erhöhten Funksignalstärke 105 auf dem Smartphone 300 angezeigt bekommt.

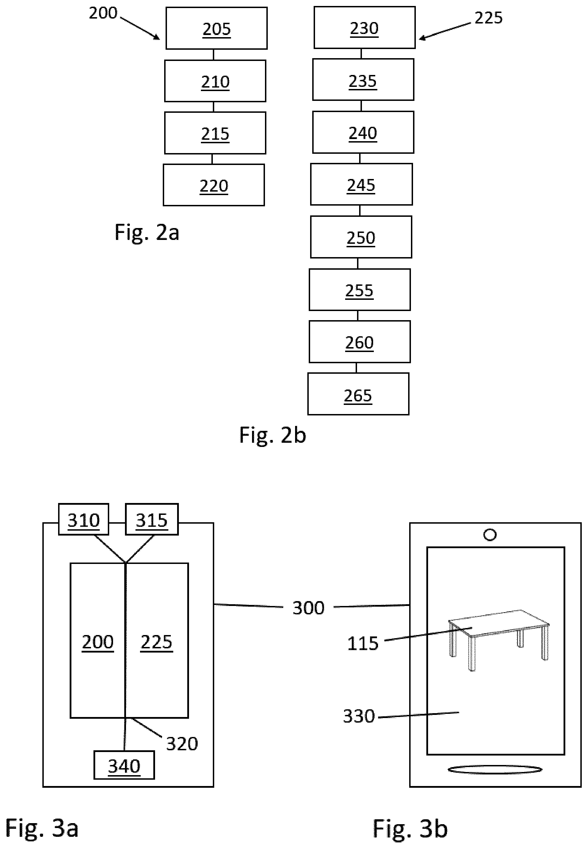

Fig. 2a zeigt ein erstes erfindungsgemäßes Verfahren 200 zur Positionierung eines funkfähigen Gerätes. Das funkfähige Gerät kann ebenfalls das Smartphone 300 oder ein anderes funkfähiges Gerät, wie beispielsweise Repeater, ein Computer, etc. sein. Folgende Schritte werden bei dem ersten erfindungsgemäßen Verfahren 200 ausgeführt:
Schritt 205: Bereitstellung des Smartphone 300, wobei ein Nutzer das Smartphone zu verschiedenen Positionen der Umgebung 100 bringt, wobei das Smartphone 300 zumindest Erfassungsmittel für eine Funksignalstärke und für Bilder, Erfassungsmittel für eine Funksignalstärke und für eine räumliche Lage des Funksignalstärke-Test-Geräts, oder Erfassungsmittel für eine Funksignalstärke und für Bilder und für eine räumliche Lage des Funksignalstärke-Test-Geräts umfasst;
Schritt 210: Aufzeichnen der entsprechenden Funksignalstärken und eines entsprechenden Bildes, Aufzeichnen der entsprechenden Funksignalstärken und der entsprechenden räumlichen Lage des Funksignalstärke-Test-Geräts, oder Aufzeichnen der entsprechenden Funksignalstärken und eines entsprechenden Bildes und der entsprechenden räumlichen Lage des Funksignalstärke-Test-Geräts an den jeweiligen verschiedenen Positionen der Umgebung als Messwerte;
Schritt 215: Übergabe der Messwerte an einen Positionierungs-Algorithmus, wobei der Positionierungs-Algorithmus die Messwerte vergleicht und eine Ausgabe mit einer ausgewählten Position zur Positionierung des funkfähigen Gerätes anhand eines festlegbares Kriteriums generiert und an ein Signalisierungsmittel mittel des Funksignalstärke-Test-Geräts übergibt;
Schritt 220: Signalisieren der ausgewählten Position zur Positionierung des funkfähigen Gerätes mittels des Signalisierungsmittels des Funksignalstärke-Test-Geräts.

Fig. 2b zeigt ein zweites erfindungsgemäßes Verfahren 225 zur Positionierung des funkfähigen Gerätes 300, also insbesondere des Smartphones 300, umfassend die folgenden Schritte:
Schritt 230: Der Benutzer definiert Zielparameter und Schwellenwerte für die Suche nach den Funksignalen im Hinblick auf die Funksignalstärken.
Schritt 235: Start der Bildaufnahme der Umgebung, also starten des optischen Scannens, auf dem Smartphone 300.
Schritt 240: die Kamera 310 des Smartphones 300 ist eingeschaltet und beginnt die optische Erfassung der Umgebung 100. Bei der Aufzeichnung wird die Ausrichtung des Smartphones 300 mit Hilfe seines Gyroskops 340 erfasst.
Schritt 245: der Nutzer bewegt sich durch die Umgebung 100 während die Kamera 310 weiterhin Bilder der Umgebung aufnimmt und weiterhin nach den Zielparametern scannt.
Schritt 250: das Smartphone erfasst kontinuierlich die Messwerte der Zielparameter während sich der Nutzer durch die Umgebung 100 bewegt. Die jeweiligen Zeitstempel werden den andauernden Kameraaufnahmen zugeordnet.
Schritt 255: der Nutzer beendet das Scannen und hört auf sich durch die Umgebung 100 zu bewegen;
Schritt 260: die Kameraaufnahmen werden verarbeitet und im Hinblick auf eine bestmögliche Übereinstimmung der Zielparameter und der Schwellenwerte analysiert.
Schritt 265: der Positionierungs-Algorithmus berechnet, gegebenenfalls nutzerspezifisch, folgendes:
   1. Alle Zeitpunkte, an denen die Zielparameter den Schwellenwert erreicht haben, werden berechnet.
   2. Für jeden Zeitstempel wird das entsprechende Bild aus der optischen Aufzeichnung für weitere Analysen extrahiert.
   3. Mit Hilfe der Objekterkennung wird jedes Bild aus 2. daraufhin analysiert, ob auf einem der extrahierten Bilder ein Ort identifiziert werden kann, der gemäß den Anforderungen des Benutzers geeignet ist, z. B. ein horizontaler Platz zum Abstellen von Gegenständen oder ein vertikaler Gegenstand oder in der Nähe einer Steckdose. Die Analyse umfasst die folgenden EXIF-Daten, die in die optische Aufnahme eingebettet sind:
      a. ISO (indication of light level/brightness),
      b. Position der Aufnahme,
      c. Zeitstempel der Aufnahme,
      d. Blitzlicht (indication of light level/brightness);
   4. Zu diesem Zweck wird ein entsprechender Score für eine Übereinstimmung mit den Zielparametern berechnet und jedem Bild zugeordnet;
   5. Das Bild mit dem höchsten Score wird dem Nutzer angezeigt, so dass das funkfähige Gerät entsprechend positioniert werden kann.

Die beiden vorstehend beschriebenen Verfahren 200, 225 sind nicht im Widerspruch zueinander, sondern können beide angewendet werden und sich insbesondere gegenseitig ergänzen. Dies bedeutet, dass Merkmale der beiden Verfahren 200, 225 soweit technisch möglich beliebig miteinander kombiniert werden können.

Fig. 3a zeigt schematisch das Funksignalstärke-Test-Gerät 300 beispielhaft als Smartphone 300 das zur Ausführung des erfindungsgemäßen Verfahrens eingerichtet ist.

Das Smartphone 300 umfasst hierzu eine Kameraeinheit 310 zum Aufnehmen von Bildern und/oder Videos, eine Antenne 315 zum empfangen der Funksignale, wobei die Antenne 315 zudem eingerichtet ist, gegebenenfalls unter Zuhilfenahme eines entsprechenden Algorithmus auf einem Prozessor 320, um die Funksignalstärke zu ermitteln. Der Prozessor 320 kann eine interne Uhr und eine Speichereinheit umfassen, wobei auf der Speichereinheit die Messwerte abgespeichert werden können. Zudem kann das Smartphone 300 Bewegungssensor 340, insbesondere ein Gyroskop 340, umfassen. Auf dem Prozessor 320 kann das Verfahren 200 und/oder das Verfahren 225 implementiert sein.

Gegebenenfalls muss der Nutzer eine bestimmte Applikation auf dem Smartphone 300 starten, damit das Verfahren zur Positionierung des funkfähigen Gerätes startet. Nachdem das Verfahren gestartet ist, bewegt sich der Nutzer mit diesen Smartphone 300 durch die Umgebung 100, wobei Bilder aufgenommen und die entsprechenden Messwerte abgespeichert und ausgewertet werden.

Der Positionierungs-Algorithmus wird in der Umgebung 100 feststellen, dass es zwei Bereiche mit hoher Funksignalstärke 105 gibt, wobei die Signalstärke in diesen Bereichen über den Zielparametern liegen. Zudem stellt der Positionierungs-Algorithmus fest, dass lediglich die hohe Funksignalstärke 105 im Bereich auf dem Tisch 115 zur Positionierung des funkfähigen Gerätes geeignet ist.

Fig. 3b zeigt, dass der Positionierungs-Algorithmus folgerichtig den Tisch 115 auswählt und diesem dem Nutzer auf seinem Display 330 präsentiert.

Der Nutzer kann nun einfach und komfortabel sein funkfähiges Gerät auf dem Tisch 115 positionieren, wobei er das funkfähige Gerät mit einer zufriedenstellenden Funksignalstärke nutzen kann.

## Patentansprüche

1. Verfahren zur Positionierung eines funkfähigen Gerätes in einer Umgebung mit Funksignalen umfassend die folgenden Schritte:
• Bereitstellung eines Funksignalstärke-Test-Geräts, wobei ein Nutzer das Funksignalstärke-Test-Gerät zu verschiedenen Positionen der Umgebung bringt, wobei das Funksignalstärke-Test-Gerät zumindest Erfassungsmittel für eine Funksignalstärke und für Bilder umfasst;
• Aufzeichnen der entsprechenden Funksignalstärken und eines entsprechenden Bildes an den jeweiligen verschiedenen Positionen der Umgebung als Messwerte; wobei die aufgezeichneten Messwerte mit einem entsprechenden Zeitstempel verknüpft werden;
• Übergabe der Messwerte an einen Positionierungs-Algorithmus, wobei der Positionierungs-Algorithmus die Messwerte vergleicht und eine Ausgabe mit einer ausgewählten Position zur Positionierung des funkfähigen Gerätes anhand eines festlegbaren Kriteriums generiert und an ein Signalisierungsmittel des Funksignalstärke-Test-Geräts übergibt, wobei das Signalisierungsmittel ein Display zur Anzeige von Bildern aufweist ;
• wobei der Positionierungs-Algorithmus die Position mit der besten Signalstärke auswählt oder
• wobei der Positionierungs-Algorithmus mehrere Positionen ausgibt, die nicht mehr als um einen festgelegten Wert von einer bestmöglichen Signalstärke abweichen dürfen
• Signalisieren der ausgewählten Position zur Positionierung des funkfähigen Gerätes mittels des Signalisierungsmittels des Funksignalstärke-Test-Geräts, wobei die ausgewählte Position durch ein Bild der gemachten Aufzeichnung dargestellt wird.

2. Verfahren nach Anspruch 1, **dadurch gekennzeichnet, dass** bei dem Aufzeichnen der Messwerte auch jeweils der entsprechende Zeitstempel aufgezeichnet und mit den Messwerten verknüpft wird.

3. Verfahren nach einem der vorhergehenden Ansprüche, **dadurch gekennzeichnet, dass** die Lage des Funksignalstärke-Test-Geräts durch GPS-Information, W-Lan und/oder Bewegungssensoren erfasst wird.

4. Verfahren nach einem der vorhergehenden Ansprüche, **dadurch gekennzeichnet, dass** der Positionierungs-Algorithmus bei der ausgewählten Position deren Geeignetheit zur Positionierung eines funkfähigen Gerätes berücksichtigt.

5. Verfahren nach einem der vorhergehenden Ansprüche, **dadurch gekennzeichnet, dass** die ausgewählte Position als eine Markierung in einer erzeugten Karte der Umgebung dargestellt wird oder als eine Navigationsanweisung für den Nutzer wiedergegeben wird.

6. Verfahren nach Anspruch 1, **dadurch gekennzeichnet, dass** das Bild einen hervorgehobenen Gegenstand, der zur Positionierung geeignet ist, anzeigt.

7. Verfahren nach Anspruch 6, **dadurch gekennzeichnet, dass** der Positionierungs-Algorithmus eine künstliche Intelligenz zum Erkennen der geeigneten Gegenstände umfasst.

8. Verfahren nach einem der Ansprüche 5 - 7, **dadurch gekennzeichnet, dass** das dargestellte Bild von dem in der ausgewählten Position erstellten Bild abweichen kann, wobei das abweichende dargestellte Bild insbesondere unter Berücksichtigung der Zeitstempel extrapoliert wird.

9. Verfahren nach einem der Ansprüche 5 bis 8, **dadurch gekennzeichnet, dass** die erzeugte Karte als eine Heat-Map dargestellt wird.

10. Verfahren nach einem der vorhergehenden Ansprüche, **dadurch gekennzeichnet, dass** der Positionierungs-Algorithmus bei der Ermittlung der ausgewählten Position Zielparameter der Funksignalstärke berücksichtigt.

11. Verfahren nach Anspruch 10, **dadurch gekennzeichnet, dass** die Zielparameter umfassen:
• zumindest ein Zielnetzwerk, und/oder
• QoS-Zielwerte.

12. Verfahren nach Anspruch 11, wobei der Positionierungs-Algorithmus signalisiert, wenn an einer Position die QoS-Zielwerte erreicht werden.

13. Funksignalstärke-Test-Gerät eingerichtet zur Ausführung des Verfahrens nach einem der Ansprüche 1 bis 12 zur Positionierung eines funkfähigen Gerätes umfassend
• Erfassungsmittel eingerichtet zum Erfassen einer Funksignalstärke und für Bilder und/oder für eine räumliche Lage des Funksignalstärke-Test-Geräts an verschiedenen räumlichen Positionen;
• Speichermittel eingerichtet zum Aufzeichnen der entsprechenden Funksignalstärken und eines entsprechenden Bildes und/oder der entsprechenden räumlichen Lage des Funksignalstärke-Test-Geräts an den jeweiligen verschiedenen Positionen der Umgebung als Messwerte;
• Prozessor auf dem ein Positionierungs-Algorithmus implementiert ist, wobei der Positionierungs-Algorithmus eingerichtet ist die Messwerte zu vergleichen und eine Ausgabe mit einer ausgewählten Position zur Positionierung des funkfähigen Gerätes zu generieren und an ein Signalisierungsmittel des Funksignalstärke-Test-Geräts übergibt;
• Signalisierungsmittel umfassend ein Display zur Anzeige von Bildern und eingerichtet zum Signalisieren der ausgewählten Position zur Positionierung des funkfähigen Gerätes anhand der Darstellung eines Bildes der gemachten Aufzeichnung.

14. Funksignalstärke-Test-Gerät nach Anspruch 13, **dadurch gekennzeichnet, dass** das Funksignalstärke-Test-Gerät als das funkfähige Gerät ausgebildet ist.

15. Funksignalstärke-Test-Gerät nach einem der Ansprüche 13 bis 14, **dadurch gekennzeichnet, dass** das Funksignalstärke-Test-Gerät ein Feedbackmodul aufweist, das eine korrekte Scangeschwindigkeit der Funksignalstärke durch einen Nutzer signalisiert.

## Claims

1. A method for positioning a radio-capable device in an environment with radio signals, comprising the following steps:
• providing a radio signal strength test device, wherein a user brings the radio signal strength test device to different positions in the environment, wherein the radio signal strength test device comprises at least acquisition means for a radio signal strength and for images;
• recording the corresponding radio signal strengths and a corresponding image at the respective different positions in the environment as measured values; wherein the recorded measured values are linked to a corresponding time stamp;
• transferring the measured values to a positioning algorithm, wherein the positioning algorithm compares the measured values and generates an output with a selected position for positioning the radio-capable device on the basis of a definable criterion and transfers the output to signalling means of the radio signal strength test device, wherein the signalling means comprises a display for displaying images;
• wherein the positioning algorithm selects the position having the best signal strength, or
• wherein the positioning algorithm outputs a plurality of positions which must not deviate from a best possible signal strength by more than a specified value
• signalling the selected position for positioning the radio-capable device by means of the signalling means of the radio signal strength test device, wherein the selected position is displayed by means of an image of the recording made.

2. The method according to claim 1, **characterised in that**, when recording the measured values, the corresponding time stamp is also recorded in each case and linked to the measured values.

3. The method according to any one of the preceding claims, **characterised in that** the location of the radio signal strength test device is acquired using GPS information, WLAN and/or motion sensors.

4. The method according to any one of the preceding claims, **characterised in that** the positioning algorithm takes into account the suitability of the selected position for positioning a radio-capable device.

5. The method according to any one of the preceding claims, **characterised in that** the selected position is displayed as a marker in a generated map of the environment or is reproduced as a navigation instruction for the user.

6. The method according to claim 1, **characterised in that** the image displays a highlighted object which is suitable for positioning.

7. The method according to claim 6, **characterised in that** the positioning algorithm comprises artificial intelligence for recognising the suitable objects.

8. The method according to any one of claims 5 - 7, **characterised in that** the displayed image may deviate from the image created at the selected position, wherein the deviating displayed image is extrapolated in particular taking into account the time stamps.

9. The method according to any one of claims 5 to 8, **characterised in that** the generated map is displayed as a heat map.

10. The method according to any one of the preceding claims, **characterised in that** the positioning algorithm takes into account target parameters of the radio signal strength when determining the selected position.

11. The method according to claim 10, **characterised in that** the target parameters comprise:
• at least one target network, and/or
• QoS target values.

12. The method according to claim 11, wherein the positioning algorithm signals when the QoS target values are achieved at a position.

13. A radio signal strength test device configured to carry out the method according to any one of claims 1 to 12 for positioning a radio-capable device, comprising
• acquisition means configured to acquire a radio signal strength and images and/or a spatial location of the radio signal strength test device at different spatial positions;
• storage means configured to record the corresponding radio signal strengths and a corresponding image and/or the corresponding spatial location of the radio signal strength test device at the respective different positions in the environment as measured values;
• a processor on which a positioning algorithm is implemented, wherein the positioning algorithm is configured to compare the measured values, to generate an output with a selected position for positioning the radio-capable device, and to transfer the output to signalling means of the radio signal strength test device;
• signalling means comprising a display for displaying images and configured to signal the selected position for positioning the radio-capable device on the basis of the display of an image of the recording made.

14. The radio signal strength test device according to claim 13, **characterised in that** the radio signal strength test device is embodied as the radio-capable device.

15. The radio signal strength test device according to any one of claims 13 to 14, **characterised in that** the radio signal strength test device comprises a feedback module which signals a correct scanning speed for scanning the radio signal strength by a user.

## Revendications

1. Procédé de positionnement d'un appareil à capacité radio dans un environnement présentant des signaux radio, comprenant les étapes suivantes :
• fourniture d'un appareil de test d'intensité de signal radio, un utilisateur amenant l'appareil de test d'intensité de signal radio à différentes positions de l'environnement, l'appareil de test d'intensité de signal radio comprenant au moins des moyens d'acquisition pour une intensité de signal radio et pour des images ;
• enregistrement des intensités de signal radio correspondantes et d'une image correspondante aux différentes positions respectives de l'environnement en tant que valeurs mesurées ; les valeurs mesurées enregistrées étant liées à un horodatage correspondant ;
• transfert des valeurs mesurées à un algorithme de positionnement, l'algorithme de positionnement comparant les valeurs mesurées et générant une sortie avec une position sélectionnée en vue du positionnement de l'appareil à capacité radio à l'aide d'un critère spécifiable et la transférant à un moyen de signalisation de l'appareil de test d'intensité de signal radio, le moyen de signalisation possédant un dispositif d'affichage destiné à afficher des images ;
• l'algorithme de positionnement sélectionnant la position ayant la meilleure intensité de signal ou
• l'algorithme de positionnement produisant plusieurs positions qui ne doivent pas s'écarter d'une meilleure intensité de signal possible de plus d'une valeur spécifiée
• signalisation de la position sélectionnée en vue du positionnement de l'appareil à capacité radio à l'aide du moyen de signalisation de l'appareil de test d'intensité de signal radio, la position sélectionnée étant représentée par une image de l'enregistrement effectué.

2. Procédé selon la revendication 1, **caractérisé en ce que**, lors de l'enregistrement des valeurs mesurées, l'horodatage correspondant est également à chaque fois enregistré et lié aux valeurs mesurées.

3. Procédé selon l'une des revendications précédentes, **caractérisé en ce que** l'emplacement de l'appareil de test d'intensité de signal radio est détecté par des informations GPS, le Wi-Fi et/ou des capteurs de mouvement.

4. Procédé selon l'une des revendications précédentes, **caractérisé en ce que** l'algorithme de positionnement tient compte, pour la position sélectionnée, de son caractère approprié pour le positionnement d'un appareil à capacité radio.

5. Procédé selon l'une des revendications précédentes, **caractérisé en ce que** la position sélectionnée est représentée sous la forme d'un marquage dans une carte générée de l'environnement ou est reproduite sous forme d'instruction de navigation pour l'utilisateur.

6. Procédé selon la revendication 1, **caractérisé en ce que** l'image affiche un objet mis en évidence qui est approprié pour un positionnement.

7. Procédé selon la revendication 6, **caractérisé en ce que** l'algorithme de positionnement comprend une intelligence artificielle destinée à reconnaître les objets appropriés.

8. Procédé selon l'une des revendications 5 à 7, **caractérisé en ce que** l'image représentée peut différer de l'image créée dans la position sélectionnée, l'image représentée différente étant extrapolée, notamment en tenant compte des horodatages.

9. Procédé selon l'une des revendications 5 à 8, **caractérisé en ce que** la carte générée est représentée sous la forme d'une carte thermique.

10. Procédé selon l'une des revendications précédentes, **caractérisé en ce que** l'algorithme de positionnement tient compte de paramètres cibles de l'intensité du signal radio lors de la détermination de la position sélectionnée.

11. Procédé selon la revendication 10, **caractérisé en ce que** les paramètres cibles comprennent :
• au moins un réseau cible, et/ou
• des valeurs cibles de QoS.

12. Procédé selon la revendication 11, l'algorithme de positionnement signalant lorsque les valeurs cibles de QoS sont atteintes à une position.

13. Appareil de test d'intensité de signal radio, conçu pour mettre en œuvre le procédé selon l'une des revendications 1 à 12 en vue du positionnement d'un appareil à capacité radio, comprenant
• des moyens d'acquisition, conçus pour acquérir une intensité de signal radio et pour des images et/ou pour un emplacement spatial de l'appareil de test d'intensité de signal radio à différentes positions spatiales ;
• des moyens de mémorisation, conçus pour enregistrer les intensités de signal radio correspondantes et une image correspondante et/ou l'emplacement spatial correspondant de l'appareil de test d'intensité de signal radio aux différentes positions respectives de l'environnement en tant que valeurs mesurées ;
• un processeur, sur lequel est mis en œuvre un algorithme de positionnement, l'algorithme de positionnement étant conçu pour comparer les valeurs mesurées et pour générer une sortie avec une position sélectionnée en vue du positionnement de l'appareil à capacité radio et le transférer à un moyen de signalisation de l'appareil de test d'intensité de signal radio;
• un moyen de signalisation, comprenant un dispositif d'affichage destiné à afficher des images et conçu pour signaler la position sélectionnée en vue du positionnement de l'appareil à capacité radio à l'aide de la représentation d'une image de l'enregistrement effectué.

14. Appareil de test d'intensité de signal radio selon la revendication 13, **caractérisé en ce que** l'appareil de test d'intensité de signal radio est réalisé sous la forme d'un appareil à capacité radio.

15. Appareil de test d'intensité de signal radio selon l'une des revendications 13 à 14, **caractérisé en ce que** l'appareil de test d'intensité de signal radio possède un module de rétroaction qui signale une vitesse de balayage correcte de l'intensité de signal radio par un utilisateur.
